# EUROPEAN PATENT APPLICATION

(11) **EP 3 739 538 A1**
(43) Date of publication of application: **18.11.2020**
(21) Application number: 20153649.7
(22) Date of filing: 24.01.2020
(51) Int. Cl.: G06Q 20/22, G06Q 20/02

(54) **SYSTEM AND METHOD OF SUPPORTING REFLECTION OF TRANSACTIONS BETWEEN BLOCKCHAIN NETWORKS**

(30) Priority: 17.05.2019 KR 20190058184
(71) Applicant: Samsung SDS Co., Ltd., Songpa-gu, Seoul (KR)
(72) Inventor: CHO, Kwang Chol, Seoul (KR); LEE, Kwang Chol, Seoul (KR); BAE, Sang Ji, Seoul (KR); SEO, Han Saem, Seoul (KR)
(74) Representative: Glawe, Delfs, Moll

(57) **Abstract**

A system for supporting reflection of transactions between blockchain networks. includes a first bridge node which receives transaction data as to a first transaction within a source blockchain network, generates a transaction reflection message based on the received transaction data, and sends the generated transaction reflection message to a second bridge node related to a target blockchain network, and the second bridge node which generates a second transaction corresponding to the first transaction based on the generated transaction reflection message and processes the generated second transaction within the target blockchain network.

## Description

### CROSS-REFERENCE TO RELATED APPLICATION

This application claims the benefit of Korean Patent Application No. 10-2019-0058184 filed on May 17, 2019 in the Korean Intellectual Property Office, the disclosure of which is incorporated herein by reference in its entirety.

### BACKGROUND

### 1. Technical Field

The present disclosure relates to a system and method of supporting reflection of transactions between blockchain networks.

### 2. Description of the Related Art

Blockchain refers to a data management technology that records continuously increasing data in blocks in a specific unit and allows each blockchain node to constitute a peer-to-peer (P2P) network to manage the blocks in a chain-like data structure, or blockchain refers to the data structure itself. Blockchain technology can ensure the integrity and security of transactions through a consensus process in which all blockchain nodes belonging to a network verify and record every transaction.

Recently, as various organizations operate and manage blockchains independently, there is a growing need to reflect transactions made in an organization to another or exchange data between the organizations. For example, there are cases where a first financial institution has transaction details of a user, and a second financial institution requires the transaction details of the user for financial transactions. For another example, asset information of a user may be recorded in a first blockchain, and credit rating information of the user may be recorded in a second blockchain. In this case, when a transaction that changes assets of the user is reflected in the first blockchain, a transaction that updates a credit rating score according to the changed assets needs to be reflected in the second blockchain.

### SUMMARY

Aspects of the present disclosure provide a system for supporting reflection of transactions between blockchains that are independent from each other and a method performed in the system.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

According to an aspect of the present disclosure, a system for supporting reflection of transactions between blockchain networks is provided. The system comprises a first bridge node which receives transaction data as to a first transaction within a source blockchain network, generates a transaction reflection message based on the received transaction data, and sends the generated transaction reflection message to a second bridge node related to a target blockchain network, and the second bridge node which generates a second transaction corresponding to the first transaction based on the generated transaction reflection message and processes the generated second transaction within the target blockchain network.

According to an aspect of the present disclosure, a method of supporting reflection of transactions between a source blockchain network and a target blockchain network is provided. The method comprises receiving transaction data as to a first transaction within the source blockchain network by using a first bridge node, generating a transaction reflection message based on the received transaction data by using the first bridge node, sending the generated transaction reflection message to a second bridge node related to the target blockchain network by using the first bridge node, generating a second transaction corresponding to the first transaction based on the generated transaction reflection message by using the second bridge node, and processing the generated second transaction through the target blockchain network by using the second bridge node.

### BRIEF DESCRIPTION OF THE DRAWINGS

These and/or other aspects will become apparent and more readily appreciated from the following description of the embodiments, taken in conjunction with the accompanying drawings in which:
FIG. 1 illustrates the configuration of a system for supporting reflection of transactions between blockchain networks according to an embodiment of the present disclosure;
FIGS. 2 and 3 illustrate connections between bridge nodes and blockchain networks and reflection of transactions made in a blockchain network to another, which can be referred to in one or more embodiments of the present disclosure;
FIG 4 illustrates a case where blockchain networks to interoperate are configured on a multi-channel basis according to an embodiment of the present disclosure;
FIG. 5 is an exemplary flowchart illustrating a transaction reflection rule sharing process according to embodiments of the present disclosure;
FIG. 6 illustrates a transaction reflection rule which can be referred to in one or more embodiments of the present disclosure;
FIG. 7 is an exemplary flowchart illustrating a transaction reflection process according to an embodiment of the present disclosure;
FIG. 8 illustrates a transaction reflection message which can be referred to in one or more embodiments of the present disclosure;
FIG. 9 is an exemplary flowchart illustrating a transaction reflection process according to an embodiment of the present disclosure; and
FIG 10 illustrates an example computing device that may implement a device according to one or more embodiments of the present disclosure.

### DETAILED DESCRIPTION

The present invention will now be described more fully hereinafter with reference to the accompanying drawings, in which exemplary embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. The same reference numbers indicate the same components throughout the specification. In the attached figures, the thickness of layers and regions is exaggerated for clarity.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted.

Unless defined otherwise, all technical and scientific terms used herein have the same meaning as commonly understood by one of ordinary skill in the art to which this invention belongs. It is noted that the use of any and all examples, or exemplary terms provided herein is intended merely to better illuminate the invention and is not a limitation on the scope of the invention unless otherwise specified. Further, unless defined otherwise, all terms defined in generally used dictionaries may not be overly interpreted.

Hereinafter, embodiments of the present disclosure will be described in detail with reference to the attached drawings.

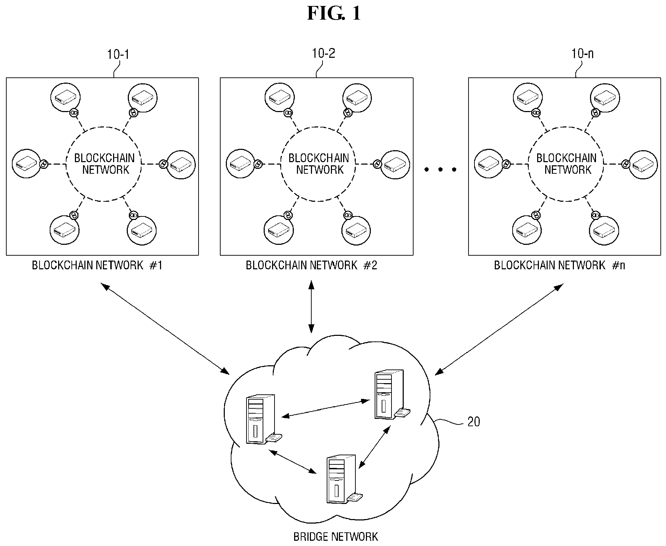

FIG. 1 illustrates the configuration of a system for supporting reflection of transactions between blockchain networks according to an embodiment of the present disclosure.

Referring to FIG. 1, the system may include a plurality of bridge nodes constituting a bridge network 20. However, this is merely an embodiment for achieving one or more aspects of the present disclosure, and some components can be added or removed as needed. In addition, it should be noted that the components of the system illustrated in FIG. 1 are functionally distinct components and that a plurality of components can be integrated with each other in an actual physical environment. For example, the bridge nodes constituting the bridge network 20 may be implemented as different logic elements in the same physical computing device. For another example, at least one blockchain node constituting a blockchain network (e.g., 10-1) and at least one bridge node constituting the bridge network 20 may be implemented as different logic elements in the same physical computing device.

The bridge network 20 is a network that supports reflection of transactions between a plurality of blockchain networks 10-1 through 10-n. The bridge network 20 may include a plurality of nodes, and each bridge node may be implemented as a computing device.

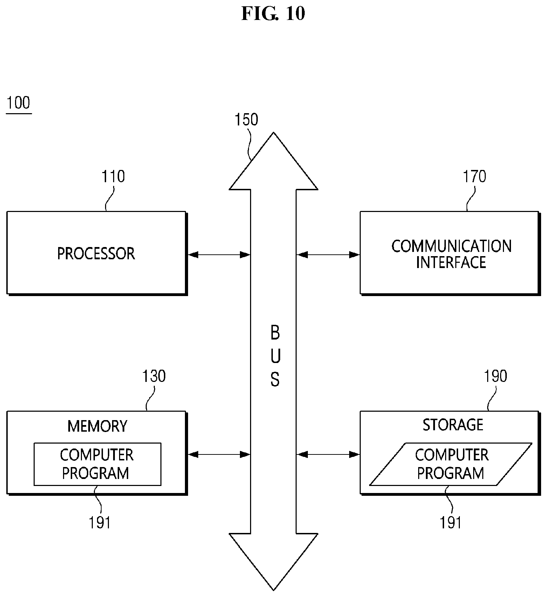

The computing device may be a notebook computer, a desktop computer, or a laptop computer. However, the computing device is not limited to these examples and can be implemented as any type of device having a computing function and a communication function. One example of the computing device is illustrated in FIG. 10.

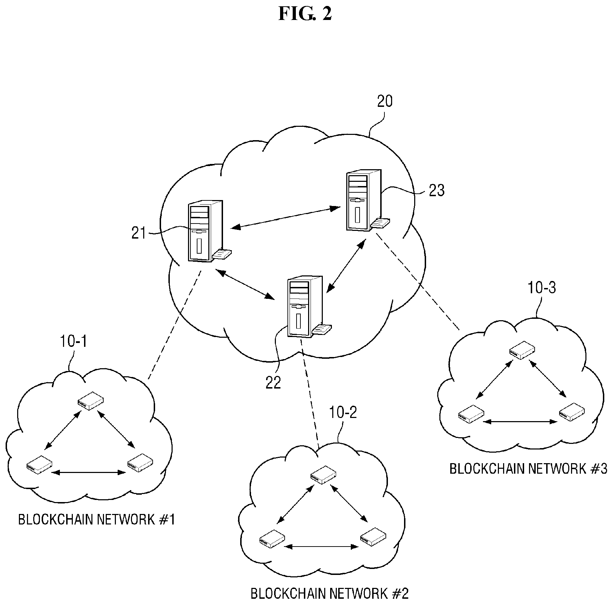

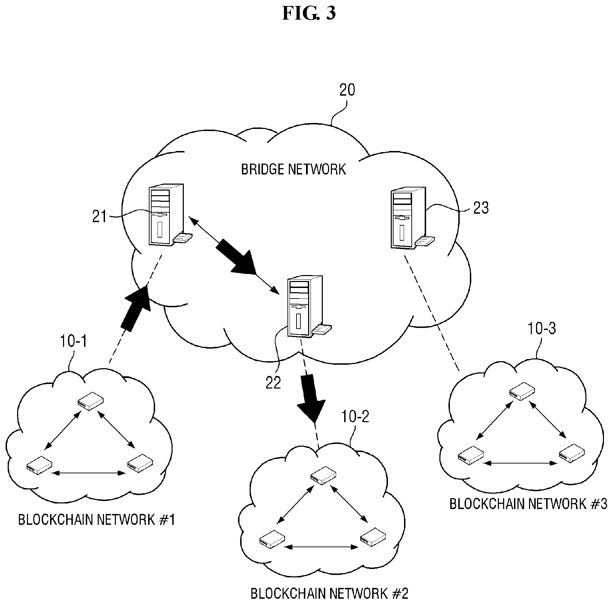

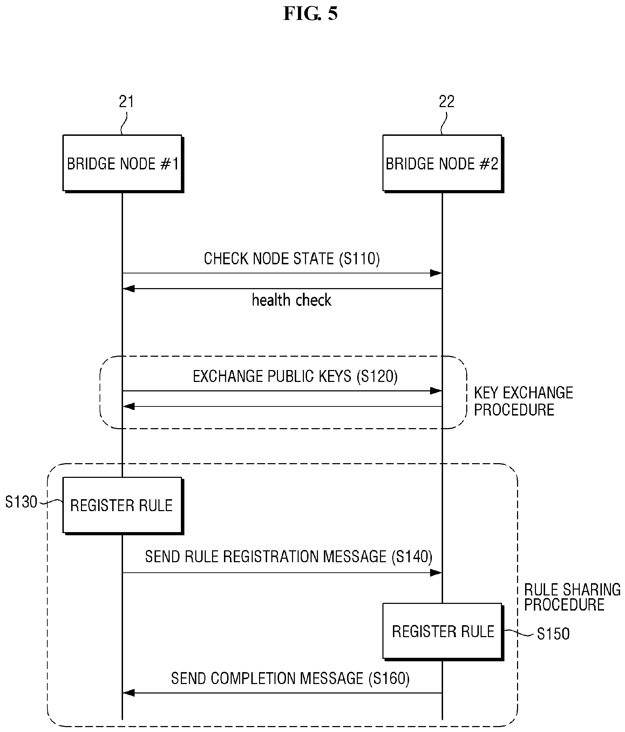

In one or more embodiments of the present disclosure, a bridge node may be responsible for linking with at least one blockchain network 10-1, 10-2, 10-3, or 10-n. For example, referring to FIG. 2, a first bridge node 21 may be responsible for linking with a first blockchain network 10-1, and a second bridge node 22 may be responsible for linking with a second blockchain network 10-2. Likewise, a third bridge node 23 may be responsible for linking with a third blockchain network 10-3. In this case, transaction reflection between the first blockchain network 10-1 and the second blockchain network 10-2 may be performed through the first bridge node 21 and the second bridge node 22 (see FIG. 3). The present embodiment will be described in more detail later with reference to FIGS. 5 through 9.

Referring again to FIG. 1, specific forms in which the bridge network 20 and/or a bridge node are implemented may vary depending on embodiments.

In one or more embodiments, a bridge node may also serve as a node of a linked blockchain network (e.g., may be implemented in the form of a full node). For example, a first bridge node (e.g., 21 in FIG. 2) may operate as a blockchain node of a first blockchain network (e.g., 10-1), and a second bridge node (e.g., 22 in FIG. 3) may operate as a blockchain node of a second blockchain network (e.g., 10-2). In this case, without a separate monitoring logic, a bridge node (e.g., 21 in FIG. 3) can monitor, in real time, events such as generation of a new block and occurrence of a transaction in a linked blockchain network (e.g., 10-1). In some embodiments, the bridge node may be implemented in a form (e.g., in the form of a lightweight node) that does not substantially manage a linked blockchain.

In some embodiments, the bridge network 20 may also manage and operate a blockchain (or ledger) independently. In the blockchain, transaction reflection rules, a public key (or certificate) of each bridge node, and the like may be recorded. According to the present embodiment, since the integrity of the transaction reflection rules and the like is ensured, the security of a transaction reflection process can be improved.

Each blockchain network 10-1, 10-2, 10-3, or 10-n is a network provided with a transaction reflection function through the bridge network 20. Each blockchain network 10-1, 10-2, 10-3, or 10-n may be configured as a peer-to-peer (P2P) network and may include a plurality of blockchain nodes. Each blockchain network 10-1, 10-2, 10-3, or 10-n may independently manage a ledger and process a transaction. For example, the first blockchain network 10-1 may process a first transaction through a consensus process between blockchain nodes and record data related to the first transaction in a first blockchain. In addition, independently of the first blockchain network 10-1, the second blockchain network 10-2 may process a second transaction and record data related to the second transaction in a second blockchain.

The ledger may be implemented to include a blockchain and a state database (DB) in which the latest state data is stored. However, since the ledger can also be implemented in other ways, the technical scope of the present disclosure is not limited to the implementation method of the ledger.

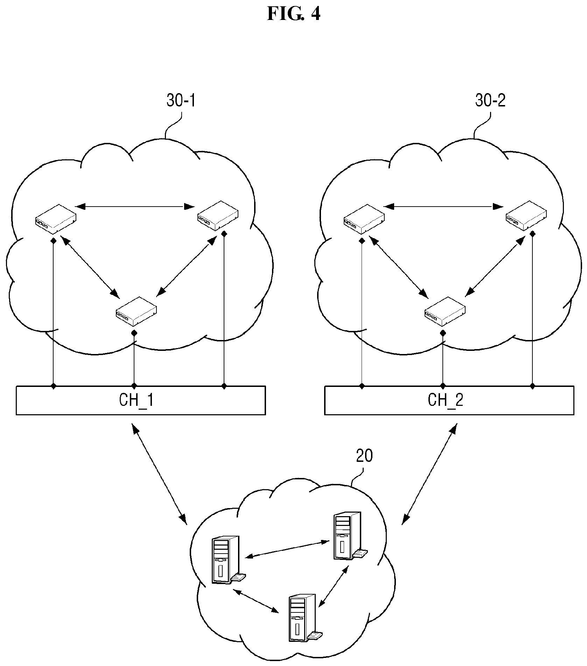

In some embodiments, each blockchain network 10-1, 10-2, 10-3, or 10-n may correspond to one or more channels. That is, when the technical spirit of the present disclosure is embodied for reflecting transactions between channels in a multi-channel-based blockchain platform, each blockchain network 10-1, 10-2, 10-3, or 10-n may correspond to one or more channels. For example, referring to FIG. 4, the bridge network 20 may provide a transaction reflection function between a first channel 30-1 and a second channel 30-2 in a multi-channel-based blockchain platform. A channel refers to a small network formed in a blockchain network. Since the meaning of the channel will be clearly understood by those skilled in the art, a detailed description thereof will be omitted. The bridge network 20 may also be implemented as a specific channel in a specific blockchain platform.

Until now, the system for supporting reflection of transactions according to the embodiments of the present disclosure has been described with reference to FIGS. 1 through 4. Next, a transaction reflection process between two blockchain networks will be described in detail based on the illustrative environment shown in FIG. 1. However, since embodiments to be described below are easily applicable even to transaction reflection performed between three or more blockchain network, the technical scope of the present disclosure is not limited by the number of interoperating blockchain networks.

In addition, for ease of understanding, the following description will be given based on the assumption that the first bridge node 21 is responsible for linking with the first blockchain network 10-1, and the second bridge node 22 is responsible for linking with the second blockchain network 10-2. The following description will also be given based on the assumption that the first blockchain network 10-1 is a source blockchain network which is a start point of transaction reflection process, and the second blockchain network 10-2 is a target blockchain network which is a destination point of the transaction reflection process. Further, a transaction of the source blockchain network will be referred to as a "source transaction," and a transaction of the target blockchain network which interoperates with the source blockchain network will be referred to as a "target transaction."

According to various embodiments of the present disclosure, a process of sharing a transaction reflection rule between bridge nodes (e.g., 21 and 22) may be performed before transaction reflection between blockchain networks (e.g., 10-1 and 10-2) is performed. Alternatively, transaction reflection may be performed based on a previously shared transaction reflection rule. The process of sharing a transaction reflection rule between bridge nodes (e.g., 21 and 22) will first be described below.

FIG. 5 is an exemplary flowchart illustrating a transaction reflection rule sharing process according to one or more embodiments of the present disclosure. In particular, FIG. 5 illustrates a case where the first bridge node 21 shares a transaction reflection rule with the second bridge rule 22. However, the flow illustrated in FIG. 5 is merely an embodiment for achieving one or more aspects of the present disclosure, and some operations can be added or removed as needed. In addition, in the transaction reflection rule sharing process according to the present embodiment, the execution order of each operation can be changed as needed within the scope in which the execution order can be logically changed.

Referring to FIG. 5, the transaction reflection rule sharing process may begin with operation S 110 in which the first bridge node 21 checks the state of the second bridge node 22 (e.g., health check). If the result of state checking indicates that the second bridge node 22 is not in a normal state (e.g., a failure state), the rule sharing process may be terminated.

In operation S120, public keys are exchanged between the bridge nodes 21 and 22. For example, the bridge nodes 21 and 22 may exchange certificates containing public keys with each other. The public keys may be used to verify various messages between the bridge nodes 21 and 22 or to authenticate the nodes. However, the technical scope of the present disclosure is not limited to using the public keys for the purposes described above.

In some embodiments, after the public keys are exchanged, an operation of authenticating the bridge nodes 21 and 22 may be further performed. It can be understood that the authentication is performed to share a transaction reflection rule only between bridge nodes verified as being reliable. The authentication may be performed using any method such as challenge-response authentication using a public key or certificate-based authentication (e.g., verifying a signature of a node with a certificate).

In operations S130 through S160, a transaction reflection rule may be shared between the bridge nodes 21 and 22. More specifically, the first bridge node 21 may register (e.g., store in a repository) a transaction reflection rule between the first blockchain network 10-1 and the second blockchain network 10-2 and send a rule registration message to the second bridge node 22 in operations S130 and S140. The second bridge node 22 may register the transaction reflection rule based on the received rule registration message and send a completion message (e.g., ACK) to the first bridge node 21. In this way, rule sharing may be performed. The transaction reflection rule may be received from an administrator, but the technical scope of the present disclosure is not limited to this case.

In some embodiments, the rule registration message may include signature information of the first bridge node 21. In this case, the second bridge node 22 may verify the signature information using the public key of the first bridge node 21 obtained in advance and perform rule registration in operation S150 only when the signature information is verified as being valid. According to the present embodiments, the safety and security of the rule sharing process can be improved through signature verification.

The transaction reflection rule may be a rule used for transaction reflection between blockchain networks and may be designed and defined in various ways.

In one or more embodiments, the transaction reflection rule may include routing information for routing transaction data, information about a source transaction, and information about a target transaction. The routing information may be routing information to a target blockchain network and include, for example, address information of a bridge node linked with the target blockchain network. The information about the source transaction may include channel information and information (e.g., contract ID) about a related smart contract. The information about the target transaction may include channel information and information about a related smart contract (e.g., information used to call a contract, such as contract ID and function name). The information about the target transaction may be used to execute the target transaction by calling the related smart contact through a specific channel.

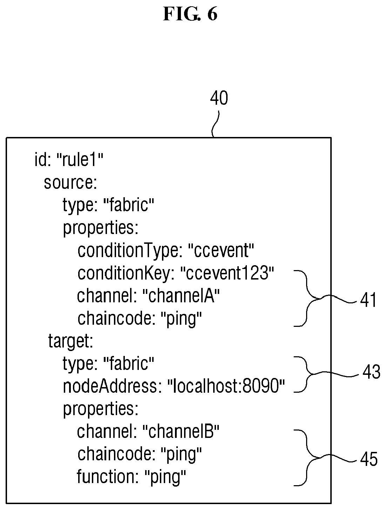

A specific example of the transaction reflection rule according to an embodiment is illustrated in FIG. 6. Referring to FIG. 6, a transaction reflection rule 40 may include information 41 about a source transaction, routing information 43 and information 45 about a target transaction, in addition to rule ID ("rule1"). However, the transaction reflection rule 40 of FIG. 6 is merely an example used for ease of understanding, and a transaction reflection rule can be designed and defined in various ways.

As described above, when the transaction reflection rule is shared, transaction reflection may be performed through the bridge nodes (e.g., 21 and 22). A transaction reflection process will now be described in detail.

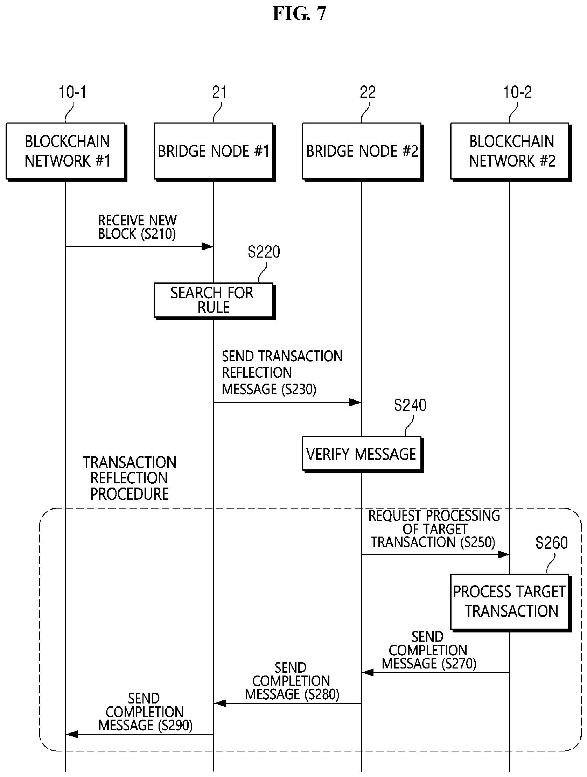

FIG. 7 is an exemplary flowchart illustrating a transaction reflection process according to an embodiment of the present disclosure. In particular, FIG. 7 illustrates a process in which transaction reflection is performed between the first blockchain network 10-1 and the second blockchain network 10-2 through the first bridge node 21 and the second bridge node 22. However, the flow illustrated in FIG. 7 is merely an embodiment for achieving one or more aspects of the present disclosure, and some operations can be added or removed as needed. In addition, in the transaction reflection process according to the present embodiments, the execution order of each operation can be changed as needed within the scope in which the execution order can be logically changed.

Referring to FIG. 7, the transaction reflection process begins with operation S210 in which the first bridge node 21 receives a new block from the first blockchain network 10-1. The new block may include transaction data related to one or more source transactions.

In operation S220, a transaction reflection rule that matches the source transactions is obtained by searching transaction reflection rules registered in advance.

In operation S230, a transaction reflection message is generated based on the obtained transaction reflection rule, and the generated transaction reflection message is sent to the second bridge node 22 linked with the target blockchain network 10-2.

For example, the obtained transaction reflection rule may include routing information to the target blockchain network 10-2 (e.g., address information of the second bridge node 22). Thus, the transaction reflection message may be sent to the second bridge node 22 with reference to the routing information.

In addition, the obtained transaction reflection rule may include information about a target transaction. The first bridge node 21 may include the information about the target transaction in the transaction reflection message. As described above, the information about the target transaction may include information for calling a related smart contract and channel information.

In addition, the transaction reflection message may include signature information of the first bridge node 21. That is, the first bridge node 21 may include signature information generated with its private key in the transaction reflection message.

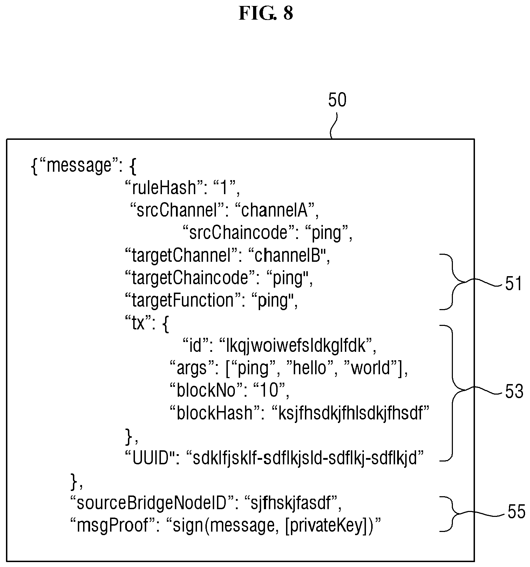

An example of the transaction reflection message is illustrated in FIG. 8. As illustrated in FIG. 8, a transaction reflection message 50 may include information 51 about a target transaction and signature information 55 of a bridge node. In addition, the transaction reflection message 50 may further include information 53 about a source transaction.

Referring again to FIG. 7, the received transaction reflection message is verified in operation S240. Specifically, the second bridge node 22 may verify the signature information included in the transaction reflection message (i.e., verify the integrity of the message and the sender of the message) by using the public key of the first bridge node 21 obtained in advance (e.g., see FIG. 5). In addition, in response to the verification result that the signature information is valid, an actual transaction reflection procedure (operations S240 through S290) may be performed. If the signature information is invalid, the transaction reflection procedure (operations S240 through S290) may not be performed.

In operation S250, the second blockchain network 10-2 is requested to process the target transaction. The information about the target transaction may be obtained from the transaction reflection message.

More specifically, the second bridge node 22 may generate the target transaction using the information about the target transaction and request the second blockchain network 10-2 to process the generated target transaction. For example, the second bridge node 22 may generate the target transaction using the channel information and smart contract call information of the target transaction.

In operation S260, the target transaction is processed through the second blockchain network 10-2. For example, the second blockchain network 10-2 may process the target transaction by executing the target transaction by calling a smart contract of a specific channel and recording transaction data, which includes the execution result of the target transaction, in a new block.

In operation S270, after the processing of the target transaction is completed (that is, after the transaction is confirmed), a completion message (e.g., ACK) is sent to the second bridge node 22. The completion message may be a message indicating that the processing of the transaction has been completed. Here, when the target transaction is confirmed, it may mean that data as to the target transaction has been recorded in a blockchain. However, the confirmation of the target transaction may also be defined as other meanings depending on embodiments. For example, when the target transaction is confirmed, it may mean that more than a certain number of blocks have been added to a specific blockchain after data as to the target transaction was recorded in the specific block.

In operations S280 through S290, the completion message may be sent to the first blockchain network 10-1 through the bridge node 21.

Until now, the transaction reflection process according to an embodiment of the present disclosure has been described with reference to FIGS. 7 and 8. According to the above description, transaction reflection may be performed between blockchain networks operated independently from each other. In particular, since transaction reflection can be performed using the separate bridge network 20 without modification to the blockchain networks (e.g., without implementation of a protocol for transaction reflection), the above-described embodiments can provide excellent portability. Further, since the transaction reflection message is verified, the tampering of the message or the involvement of malicious code in transaction reflection can be prevented. Accordingly, this can improve the security and safety of the transaction reflection process.

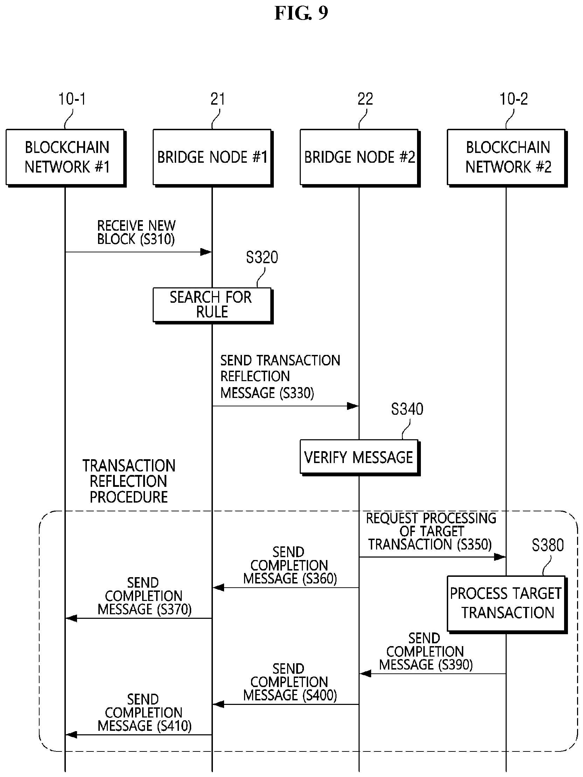

FIG. 9 is an exemplary flowchart illustrating a transaction reflection process according to an embodiment of the present disclosure. For clarity of the present specification, a redundant description of operations and aspects identical to those of the above-described embodiments will be omitted.

Referring to FIG. 9, in the present embodiments, the second bridge node 22 may send a completion message to the first bridge node 21 before processing of a target transaction is completed (that is, before the target transaction is confirmed) in operations S350 and S360. This may be understood as the intention to provide real-time properties to transaction reflection and reduce a response time felt by a user.

However, in some embodiments, the second bridge node 22 may send the completion message about the target transaction to the first bridge node 21 only under certain conditions.

For example, the second bridge node 22 may send the completion message to the first bridge node 21 in advance in response to the determination that a transaction processing time of the second blockchain network 10-2 is equal to or greater than a threshold. That is, in order to prevent the entire transaction reflection process from being delayed due to a delay in the transaction processing of the second blockchain network 10-2, whether to send the completion message in advance may be determined according to the transaction processing time of the second blockchain network 10-2. The threshold may be a preset, fixed value or a variable value that varies according to a situation. For example, the threshold may be a variable value that varies based on the type of transaction reflection. More specifically, for example, the threshold may be determined to be a very small value when transaction reflection should be performed in real time and may be determined to be a larger value when real-time reflection is not necessary.

For another example, when there is a successive transaction reflection process to be performed caused by the target transaction, the second bridge node 22 may send the completion message to the first bridge node 21 in advance. This can also be understood as the intention to prevent the entire transaction reflection process from being delayed.

Until now, the transaction reflection process according to the embodiments of the present disclosure has been described with reference to FIG. 9. According to the above description, a completion message is immediately sent based on the reasonable assumption that a target transaction will be successfully processed. Therefore, the time required for transaction reflection can be greatly shortened, thereby greatly improving the response time felt by a user.

An example computing device 100 that may implement a device (e.g., the bridge node 21 or 22) according to one or more embodiments of the present disclosure will now be described with reference to FIG. 10.

FIG. 10 illustrates the hardware configuration of a computing device 100.

Referring to FIG. 10, the computing device 100 may include one or more processors 110, a bus 150, a communication interface 170, a memory 130 which loads a computer program 191 to be executed by the processors 110, and a storage 190 which stores the computer program 191. In FIG 10, only the components related to the embodiment of the present disclosure are illustrated. Therefore, it will be understood by those of ordinary skill in the art to which the present disclosure pertains that other general-purpose components can be included in addition to the components illustrated in FIG. 10. That is, the computing device 100 may include various components in addition to the components illustrated in FIG. 10.

The processors 110 control the overall operation of each component of the computing device 100. The processors 110 may include a central processing unit (CPU), a micro-processor unit (MPU), a micro-controller unit (MCU), a graphic processing unit (GPU), or any form of processor well known in the art to which the present disclosure pertains. In addition, the processors 110 may perform an operation on at least one application or program for executing methods/operations according to one or more embodiments of the present disclosure. The computing device 100 may include one or more processors.

The memory 130 stores various data, commands and/or information. The memory 130 may load one or more programs 191 from the storage 190 in order to execute methods/operations according to various embodiments of the present disclosure. The memory 130 may be implemented as a volatile memory such as a random access memory (RAM), but the technical scope of the present disclosure is not limited to this case.

The bus 150 provides a communication function between the components of the computing device 100. The bus 150 may be implemented as various forms of buses such as an address bus, a data bus, and a control bus.

The communication interface 170 supports wired and wireless Internet communication of the computing device 100. In addition, the communication interface 170 may support various communication methods other than Internet communication. To this end, the communication interface 170 may include a communication module well known in the art to which the present disclosure pertains.

The storage 190 may non-temporarily store one or more programs 191. The storage 190 may include a non-volatile memory such as a read only memory (ROM), an erasable programmable ROM (EPROM), an electrically erasable programmable ROM (EEPROM) or a flash memory, a hard disk, a removable disk, or any form of computer-readable recording medium well known in the art to which the present disclosure pertains.

The computer program 191 may include one or more instructions that implement methods/operations according to various embodiments of the present disclosure. When the computer program 191 is loaded into the memory 130, the processors 110 may perform the methods/operations according to the various embodiments of the present disclosure by executing the instructions.

For example, the computer program 191 may include one or more instructions for performing an operation of receiving transaction data as to a source transaction related to a source blockchain network, an operation of generating a transaction reflection message based on the received transaction data, and an operation of sending the generated transaction reflection message to a bridge node related to a target blockchain network. Alternatively, the computer program 191 may include one or more instructions for performing an operation of generating a target transaction related to the source transaction based on the transaction reflection message in response to reception of the transaction reflection message and an operation of processing the generated target transaction through the target blockchain network. In this case, a bridge node (e.g., 21) according to embodiments of the present disclosure may be implemented through the computing device 100.

Until now, the technical spirit of the present disclosure and various embodiments embodying the spirit have been described with reference to FIGS. 1 through 10. However, the effects of the technical spirit of the present disclosure and the embodiments of the present disclosure are not restricted to the one set forth herein. The above and other effects of the embodiments will become more apparent to one of daily skill in the art to which the embodiments pertain by referencing the claims.

The technical spirit of the present disclosure described above with reference to FIGS. 1 through 10 can be implemented in computer-readable code on a computer-readable medium. The computer-readable recording medium may be, for example, a removable recording medium (a compact disc (CD), a digital versatile disc (DVD), a Blu-ray disc, a universal serial bus (USB) storage device or a portable hard disk) or a fixed recording medium (a ROM, a RAM or a computer-equipped hard disk). The computer program recorded on the computer-readable recording medium may be transmitted to another computing device via a network such as the Internet and installed in the computing device, and thus can be used in the computing device.

In the above description, it is described that all the components constituting the embodiments of the present disclosure are combined or operated as one, but the technical features of the present disclosure are not limited to these embodiments. That is, within the scope of the present disclosure, all of the components may be selectively combined and operated in one or more combinations.

Although the operations are shown in a specific order in the drawings, it should not be understood that the operations must be performed in the specific order or sequential order shown, or that all the illustrated operations must be executed to achieve the desired results. In certain circumstances, multitasking and parallel processing may be advantageous. Moreover, the separation of the various configurations in the embodiments described above should not be understood as requiring that separation, and it should be understood that the described program components and systems may generally be integrated together into a single software product or packaged into multiple software products.

In concluding the detailed description, those skilled in the art will appreciate that many variations and modifications can be made to the exemplary embodiments without substantially departing from the principles of the present invention. Therefore, the disclosed exemplary embodiments of the invention are used in a generic and descriptive sense only and not for purposes of limitation.

## Claims

1. A system for supporting reflection of transactions between blockchain networks, the system comprising:
a source blockchain network;
a first bridge node linking with the source block chain network, the first bridge node which receives transaction data as to a first transaction within the source blockchain network, generates a transaction reflection message based on the received transaction data, and sends the generated transaction reflection message to a second bridge node;
the second bridge node which generates a second transaction corresponding to the first transaction based on the generated transaction reflection message and requests a target blockchain network to process the generated second transaction; and
the target blockchain network with which the second bridge node links and process the requested second transaction.

2. The system of claim 1, wherein the first bridge node sends the transaction reflection message generated based on a pre-registered transaction reflection rule to the second bridge node, and the pre-registered transaction reflection rule comprises information about routing to the target blockchain network.

3. The system of claim 1, wherein the first bridge node generates the transaction reflection message, which comprises information about the second transaction, based on a pre-registered transaction reflection rule, and the pre-registered transaction reflection rule comprises information about the second transaction reflecting the first transaction.

4. The system of claim 3, wherein the information about the second transaction comprises information for calling a smart contract corresponding to the second transaction.

5. The system of claim 3, wherein the information about the second transaction comprises channel information related to the second transaction.

6. The system of claim 1, wherein the transaction reflection message comprises signature information of the first bridge node, and the second bridge node verifies the signature information and generates the second transaction in response to the verification result that the signature information is valid.

7. The system of claim 1, wherein the first bridge node receives a new block generated in the source blockchain network and generates the transaction reflection message based on the transaction data included in the new block.

8. The system of claim 1, wherein the second bridge node sends a processing completion message for the second transaction to the first bridge node in response to the determination that transaction data as to the second transaction has been recorded in a blockchain of the target blockchain network.

9. The system of claim 1, wherein the second bridge node sends a processing completion message for the second transaction to the first node before transaction data as to the second transaction is recorded in a blockchain of the target blockchain network.

10. The system of claim 9, wherein the second bridge node sends the processing completion message before the processing of the second transaction is completed in response to the determination that a transaction processing time of the target blockchain network is equal to or greater than a threshold.

11. A method of supporting reflection of transactions between a source blockchain network and a target blockchain network, the method comprising:
receiving transaction data as to a first transaction within the source blockchain network by using a first bridge node;
generating a transaction reflection message based on the received transaction data by using the first bridge node;
sending the generated transaction reflection message to a second bridge node related to the target blockchain network by using the first bridge node;
generating a second transaction corresponding to the first transaction based on the generated transaction reflection message by using the second bridge node; and
processing the generated second transaction through the target blockchain network by using the second bridge node.
